# DEMANDE DE BREVET EUROPEEN

(11) **EP 1 258 584 A1**
(43) Date de publication de la demande: **20.11.2002**
(21) Numéro de dépôt: 02291171.3
(22) Date de dépôt: 10.05.2002
(51) Int. Cl.: E05D 5/02

(54) **Paumelle et son procédé de montage**

(30) Priorité: 18.05.2001 FR 0106571
(71) Demandeur: Bezault S.A., 49180 Longue (FR)
(72) Inventeur: Sanchez, Denis, 49100 Angers (FR); Guerin, Eric, 49400 Villebernier (FR)
(74) Mandataire: Jolly, Jean-Pierre

(57) **Abrégé**

L'invention concerne une paumelle et son procédé de montage.

La paumelle comportant deux lames de paumelle complémentaires (1), une (1) fixée sur le cadre ouvrant (5) et l'autre sur le cadre dormant les cadres ouvrant et dormant (5) étant constitués chacun d'un profilé métallique est caractérisée en ce que chacune des lames de paumelle (1) comporte au moins une gorge (35) formée à l'intérieur de son talon extrémité et loge une cale de fixation (29) articulée à ladite gorge (35), la cale (29) comportant en outre au moins une partie de prise (31) à l'aile (9) du profilé respectif de cadre ouvrant ou de cadre dormant, par laquelle elle peut être serrée solidairement à ce cadre au moyen d'au moins une vis (37) traversant la lame de paumelle, en appui sur la lame et en prise sur ladite cale.

## Description

L'invention concerne une paumelle et son procédé de montage.

On connaît les paumelles de châssis ouvrants, portes ou fenêtres ou volets, fixées par vis et cales prémontées sur le cadre de dormant et d'ouvrant. Néanmoins, le montage est relativement aléatoire, notamment pour le positionnement et le serrage des cales.

L'invention vise à remédier à cet inconvénient en proposant une paumelle de châssis permettant l'articulation d'un cadre ouvrant par rapport à un cadre dormant, et comportant deux lames de paumelle complémentaires, une fixée sur le cadre ouvrant et l'autre sur le cadre dormant, les cadres ouvrant et dormant étant constitués chacun d'un profilé métallique, caractérisée en ce que chacune des lames de paumelle comporte au moins une gorge formée à l'intérieur de son talon extrémité et loge une cale de fixation articulée à ladite gorge, la cale comportant en outre au moins une partie de prise à l'aile du profilé respectif de cadre ouvrant ou de cadre dormant, par laquelle elle peut être serrée solidairement à ce cadre au moyen d'au moins une vis traversant la lame de paumelle, en appui sur la lame et en prise sur ladite cale.

Ladite gorge de chaque lame de paumelle est avantageusement formée dans l'angle intérieur supérieur de son talon d'extrémité à l'opposé de la partie de prise de la cale de fixation.

Cette caractéristique permet d'articuler lors du montage la cale dans la lame de paumelle pour amener sa partie de prise en engagement dans l'aile du profilé de cadre correspondant, le serrage de ladite vis permettant par l'appui de la cale sur la gorge d'articulation son mouvement latéral en prise sur l'aile du profilé jusqu'à blocage de la fixation.

Naturellement, selon la conformation du profilé de cadre, la partie de prise de la cale vient se bloquer contre l'aile du profilé, sur son flanc ou sur son retour.

La gorge est avantageusement conformée en C, de section régulière circulaire.

Avantageusement, la vis de serrage de la cale est disposée inclinée vers l'extérieur de façon à favoriser par un dégagement du corps de lame sa manoeuvre.

Par ailleurs, pour être redondant dans la fixation de la lame de paumelle, on utilise deux vis de serrage de la cale.

Enfin, les cales de fixation respectives de la lame de paumelle de cadre ouvrant et de la lame de cadre dormant sont identiques, ceci afin de minimiser le nombre de pièces en jeu.

L'invention est illustrée ci-après à l'aide d'exemples de réalisation décrits ci-après en référence aux dessins annexés, sur lesquels :
La figure 1 est une vue en perspective montrant le montage d'une lame de paumelle de cadre ouvrant selon l'invention sur le profilé de cadre ouvrant correspondant,
La figure 2 est une vue de côté de la lame de paumelle et du profilé selon la figure 1.
La figure 3 est une vue analogue à la figure 1 montrant la lame de paumelle de cadre ouvrant fixée sur le profilé de cadre ouvrant,
La figure 4 est une vue de côté de la lame de paumelle et du profilé selon la figure 3,
La figure 5 est une vue de côté montrant la lame de paumelle de cadre dormant en cours de montage sur le profilé de cadre dormant correspondant,
La figure 6 est une vue analogue à la figure 5 montrant la lame de paumelle fixée sur le profilé de cadre dormant, et
La figure 7 est une vue analogue à la figure 6 montrant la lame de paumelle fixée sur un autre profilé de cadre dormant.

La paumelle selon l'invention est constituée de deux lames de paumelle complémentaires, fixées l'une 1 sur un cadre ouvrant 5, tel que porte, fenêtre, volet, et l'autre 3 sur un cadre dormant 7, à savoir la huisserie support du cadre ouvrant. Les deux lames de paumelles 1 et 3 sont assemblées l'une à l'autre au moyen d'un gond reçu dans un manchon de l'autre. L'assemblage est classique et n'est pas représenté.

Les cadres ouvrant 5 et dormant 7 sont des profilés métalliques comportant de façon classique des ailes de fixation des lames de paumelle, respectivement 9 et 11.

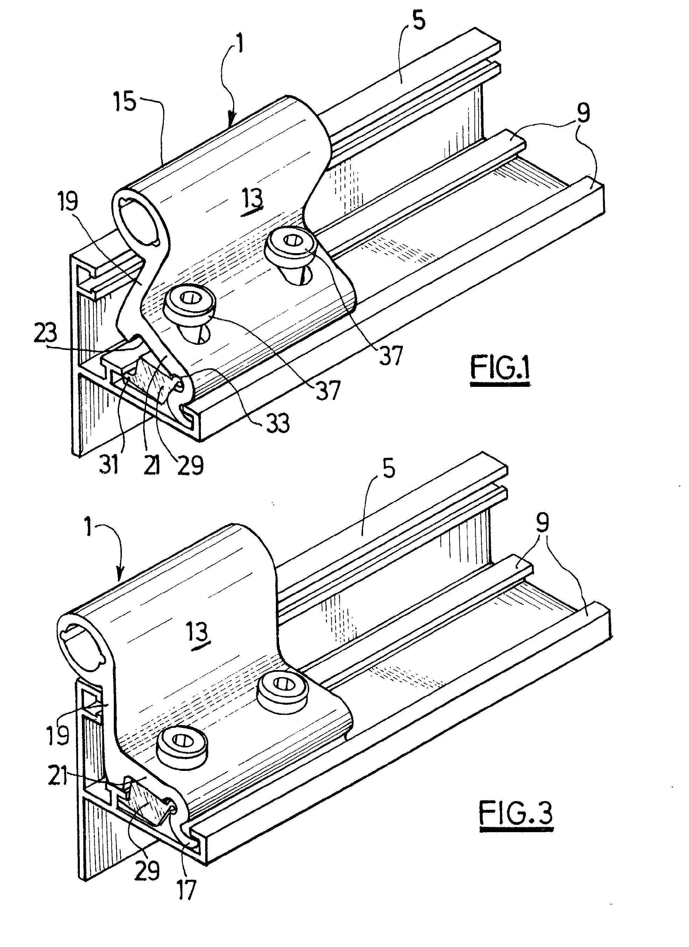

La lame de paumelle 1 de cadre ouvrant est représentée sur les figures 1 à 4.

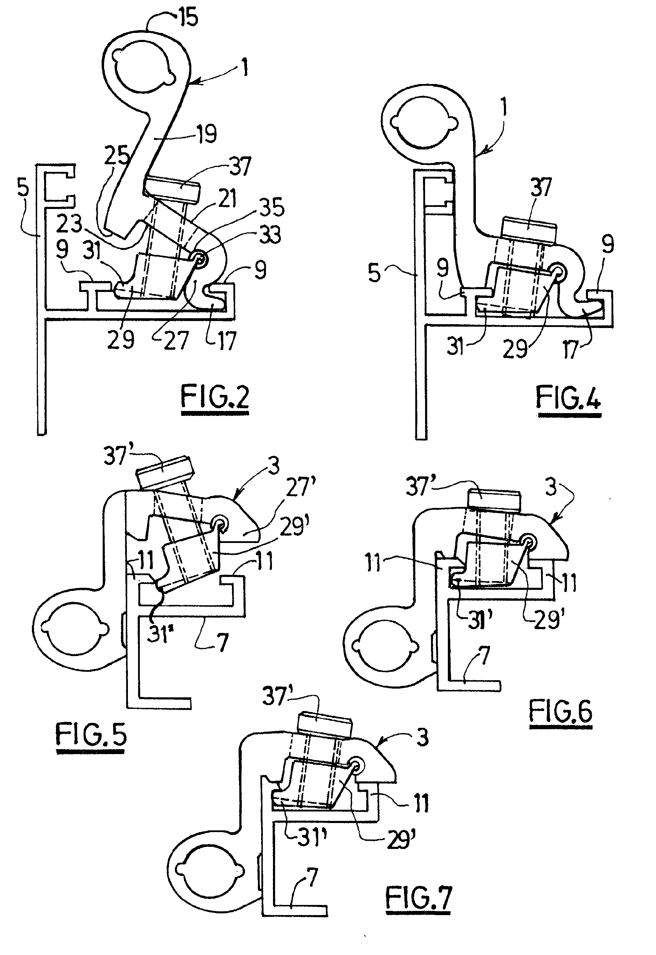

La lame est représentée en cours de montage sur le cadre profilé correspondant 5 sur les figures 1 et 2.

La lame de paumelle est de conformation externe classique, comprenant un corps allongé régulier plié 13, pourvu d'un manchon d'assemblage 15 à une extrémité et d'un retour de prise 17 sur l'aile 9 de cadre profilé à l'autre extrémité. Le pli supérieur 19 du corps 13 est destiné à être appliqué au montage (figure 3, 4) sur l'aile supérieure du cadre profilé et le pli inférieur 21 ou talon sur les ailes opposées inférieures 9 du cadre.

L'intérieur du pli inférieur 21 est évidé selon une cavité régulière 23 de section sensiblement rectangulaire, prenant appui par la première jambe 25 de cavité (gauche) sur l'aile inférieure correspondante du cadre profilé et la seconde jambe d'extrémité 27 vient en prise par son retour 17 sur l'aile opposée de cadre profilé.

Cette cavité 23 reçoit une cale de fixation 29 de conformation intérieure sensiblement complémentaire. Cette cale 29 est montée articulée dans ladite cavité 23, comportant en outre une nervure 31 venant en prise dans l'aile inférieure gauche du cadre profilé.

La cale est articulée à la lame de paumelle par sa partie haute selon une seconde nervure 33 opposée à la nervure 31. Cette nervure 33 en saillie et à forme de ligne d'axe, est reçue dans une gorge complémentaire 35 de la lame. La gorge 35 est conformée régulière de section à forme de C circulaire.

La cale 35 est en outre reliée à deux vis 37 montées traversantes dans le pli inférieur 21 de paumelle et dont la tête vient en appui au serrage sur la lame. Ces vis sont suffisamment écartées ou inclinées relativement au pli supérieur 19 de lame pour autoriser le débattement rotatif de la came et sa prise sur l'aile gauche du cadre profilé. Ces vis sont vissées sur la cale sans dépasser de sa face inférieure. Toutefois, elles peuvent comporter une pointe apte à venir au serrage contre le profilé de manière à bloquer toute translation de la lame relativement au profilé.

Le montage est très simple. La lame est engagée inclinée par son extrémité 17 en prise dans l'aile externe du cadre profilé puis amenée vers l'aile opposée tandis que la cale est tournée en débattement pour passer à faible jeu sur l'aile inférieure gauche. Il suffit alors de serrer les vis 37 pour provoquer un mouvement latéral externe de la partie de prise 31 de la cale, laquelle s'engage alors sur l'aile gauche. Au blocage des vis, la cale de même que la lame est parfaitement solidarisée au cadre profilé, retenue à prise serrée sur chacune des ailes inférieures du profilé.

La lame de paumelle 3 de cadre dormant, représentée aux figures 5 à 7 est analogue à la lame 1 de cadre ouvrant. Elle diffère uniquement par le fait qu'elle ne comporte pas de retour de prise 17 sur l'aile de cadre profilé correspondant à l'extrémité de son talon, cette partie n'étant pas nécessaire pour le cadre dormant.

La cale de fixation 29' reçue dans l'évidement du talon de lame est identique à celle de la lame 1 de paumelle de cadre ouvrant de même que son montage articulé dans l'angle intérieur de jambe d'extrémité 27' du talon.

Le montage (figure 5 et 6) est également analogue, obtenu par serrage des vis 37' après engagement de la partie de prise 31' de came sur l'aile de profilé correspondante.

La partie de prise 31' de la cale peut porter contre le flanc de l'aile 11, tel que représenté à la figure 6 ou sur le dessous de l'aile 11 tel que représenté à la figure 7, selon la conformation du cadre profilé support.

Enfin, il est à noter que l'invention peut être appliquée à la fixation d'autres pièces que des lames de paumelles sur un profilé et par exemple à toute sorte d'accessoires sur un profilé, en utilisant le principe de cale de fixation intérieure articulée dans le socle support de l'accessoire, avec au moins une partie de prise de la cale venant en prise au serrage de la cale, par vis ou autre, sur une aile du profilé.

## Revendications

1. Paumelle de châssis permettant l'articulation d'un cadre ouvrant (5) par rapport à un cadre dormant (7), et comportant deux lames de paumelle complémentaires (1, 3), une (1) fixée sur le cadre ouvrant (5) et l'autre (3) sur le cadre dormant (7), les cadres ouvrant et dormant (5, 7) étant constitués chacun d'un profilé métallique, **caractérisée en ce que** chacune des lames de paumelle (1, 3) comporte au moins une gorge (35) formée à l'intérieur de son talon extrémité et loge une cale de fixation (29, 29') articulée à ladite gorge (35), la cale (29, 29') comportant en outre au moins une partie de prise (31, 31') à l'aile (9, 11) du profilé respectif de cadre ouvrant ou de cadre dormant, par laquelle elle peut être serrée solidairement à ce cadre au moyen d'au moins une vis (37, 37') traversant la lame de paumelle, en appui sur la lame et en prise sur ladite cale, ladite gorge (35) de chaque lame de paumelle étant formée dans l'angle intérieur supérieur de son talon d'extrémité à l'opposé de la partie de prise (31, 31') de la cale de fixation.

2. Paumelle, selon la revendication 1, **caractérisée en ce que** la partie de prise (31, 31') de la cale vient se bloquer contre l'aile (9, 11) du profilé, sur son flanc ou sur son retour.

3. Paumelle, selon l'une des revendications précédentes, **caractérisée en ce que** la gorge (35) est conformée en C, de section régulière circulaire.

4. Paumelle, selon l'une des revendications précédentes, **caractérisée en ce que** ladite vis (37, 37') de serrage de la cale est disposée inclinée vers l'extérieur de façon à favoriser par son dégagement du corps de lame (13) sa manoeuvre.

5. Paumelle, selon l'une des revendications précédentes, **caractérisée en ce que** les cales de fixation respectives (29, 29') de la lame de paumelle de cadre ouvrant et de la lame de cadre dormant sont identiques.

6. Paumelle, selon l'une des revendications précédentes, **caractérisée en ce que** la cale (29, 29') est conformée en sorte que sa partie de prise (31, 31'), hors serrage, vienne en position de débattement, passer à faible jeu sur l'aile de prise correspondante (9, 11) du cadre profilé et s'y engage au serrage.

7. Paumelle, selon l'une revendications précédentes, **caractérisée en ce que** la vis (37, 37') comporte une pointe apte à venir au serrage contre le cadre profilé.
